# EUROPEAN PATENT APPLICATION

(11) **EP 4 559 678 A1**
(43) Date of publication of application: **28.05.2025**
(21) Application number: 23842639.9
(22) Date of filing: 12.04.2023
(51) Int. Cl.: B32B 37/12, B05D 1/28, B05D 1/36, B05D 7/14, B05D 7/24, B29C 65/48, B32B 27/00

(54) **METHOD FOR PRODUCING MULTILAYER FILM, AND MULTILAYER FILM**

(30) Priority: 19.07.2022 JP 2022114691
(71) Applicant: Toyo Seikan Co., Ltd., Tokyo 141-8640 (JP)
(72) Inventor: GOTOU, Osamu, Yokohama-shi, Kanagawa 230-0001 (JP); SAEKI, Mayumi, Yokohama-shi, Kanagawa 230-0001 (JP)
(74) Representative: dompatent von Kreisler Selting Werner - Partnerschaft von Patent- und Rechtsanwälten mbB
(86) International application number: PCT/JP2023/014803
(87) International publication number: WO 2024/018705

(57) **Abstract**

Provided are a method for producing a multilayer film and a multilayer film, the multilayer film having three or more layers including an aluminum foil as an intermediate layer that can be laminated using a solventless adhesive. A method for producing a multilayer film in which three or more films are bonded to each other includes: a first lamination step of applying a solventless adhesive to a first film and laminating a second film while superimposing the second film to obtain a first intermediate body; and a second lamination step of applying a solventless adhesive to the first intermediate body and laminating a third film while superimposing the third film. Of the first and the second films, the film to be superimposed on the third film with a second adhesive-applied layer interposed therebetween is an aluminum foil.

## Description

### Technical Field

The present invention relates to a method for producing a multilayer film in which raw material films are bonded using a solventless adhesive to obtain a multilayer film of three or more layers, and a multilayer film obtained by the method.

### Background Art

A pouch packaging container used for food packaging, medical product packaging, cosmetic packaging, and the like, and a flexible packaging container used for a cup lid are typically constituted by a multilayer film in which a plurality of raw material films such as resin films and metal foils are laminated.

In such packaging containers, for example, when resin films having different characteristics, such as a combination of a nylon film and a polyethylene film, are laminated, the films are generally bonded by an adhesive for lamination because of poor adhesion between the films.

As such an adhesive, it is desired to use a solventless adhesive which does not contain any organic solvent and can be coated by heating the adhesive to lower its viscosity from the viewpoint of reducing a global environmental load. An example in the related art of a multilayer film using a known solventless adhesive includes a multilayer film having an adhesive layer made of a solventless adhesive which is composed of a main agent made of polyester polyol and a curing agent made of an aliphatic diisocyanate compound and an alicyclic diisocyanate, and has a viscosity at 70°C of from 300 to 900 mPa·s (see Patent Document 1).

### Citation List

### Patent Document

Patent Document 1: JP 5397584 B

### Summary of Invention

### Technical Problem

On the other hand, in order to bond three or more raw material films with an adhesive for lamination, usually, by using a coating device provided with a pair of coating rolls facing each other, an adhesive is applied to a first film passing between the coating rolls, a second film is laminated while being superimposed with an adhesive-applied layer made of the adhesive interposed therebetween to obtain an intermediate body, the intermediate body is temporarily wound by a winding roll, and again, a third film is laminated while being superimposed on an intermediate body including a solidified adhesive layer in the same manner.

However, it has been found that when the solventless adhesive is used as the adhesive, the raw material film as a third layer may not be possible to be laminated depending on the production method.

Specifically, when the first film or the second film is an aluminum foil, the adhesive of the intermediate body wound by the winding roll is solidified, and then may not be possible to be unwound again into a web form, and even if the intermediate body is forcibly pulled and unwound, unevenness or breakage occurs in the resin film or the aluminum foil.

The reason why such a phenomenon occurs is presumed to be that, while the aluminum foil inevitably has fine holes called pinholes, the solventless adhesive is wound on the winding roll in a state where its viscosity is low unlike a case where a laminate adhesive containing an organic solvent used for general dry lamination is used, and thus while a predetermined film is bonded to a front surface side of the aluminum foil, adhesion occurs also on the front surface of the film that comes into facing contact with a back surface side of the aluminum foil by winding due to the solventless adhesive exuding to an opposite side through the pinholes of the aluminum foil, resulting in the occurrence of blocking. In the case of performing general dry lamination, since a drying step is performed before being wound after bonding, the organic solvent is volatilized to increase the viscosity of the adhesive to some extent, and even if the aluminum foil is used for the first film or the second film, there is no problem of exudation to the opposite side.

The present invention has been made in view of the above circumstances, and an object of the present invention is to provide a method for producing a multilayer film capable of laminating a multilayer film of three or more layers including an aluminum foil using a solventless adhesive, and the multilayer film.

### Solution to Problem

A method for producing a multilayer film of the present invention is a production method of a multilayer film in which three or more films are bonded to each other with an adhesive layer interposed therebetween and is characterized by including: in a first coating device provided with a pair of coating rolls facing each other, performing a first lamination step of applying an adhesive to a first film passing between the coating rolls and laminating a second film while superimposing the second film with a first adhesive-applied layer including the adhesive interposed therebetween to obtain a first intermediate body; in a second coating device provided with a pair of coating rolls facing each other, performing a second lamination step of applying an adhesive to the first intermediate body and laminating a third film while superimposing the third film with a second adhesive-applied layer including the adhesive interposed therebetween; after the first and second lamination steps, performing an aging step of solidifying the first adhesive-applied layer and the second adhesive-applied layer to obtain an adhesive layer respectively, wherein the first adhesive-applied layer includes a solventless adhesive, and when the first adhesive-applied layer is subjected to the second lamination step, the solventless adhesive included in the first adhesive-applied layer of the first intermediate body is flowable, and of the first and second films, a film to be superimposed on the third film with the second adhesive-applied layer interposed therebetween is an aluminum foil.

A multilayer film of the present invention is characterized by being produced by the production method described above.

### Advantageous Effects of Invention

According to the method for producing a multilayer film of the present invention, even when, of the first and second films, the film to be superimposed on the third film with the second adhesive-applied layer interposed therebetween is an aluminum foil, and also the first adhesive-applied layer to which these films are to be bonded is made of a solventless adhesive, the aging step of solidifying the first adhesive-applied layer to obtain the adhesive layer is performed after the second lamination step; that is, the first intermediate body is subjected to the second lamination step without solidifying the first adhesive-applied layer. Therefore, even if the solventless adhesive included in the first adhesive-applied layer remains flowable when subjected to the second lamination step, the second adhesive-applied layer is formed on a back surface of the aluminum foil such that nothing is in contact with and faces the back surface side of the aluminum foil, and the third film is further overlapped; therefore, sticking (blocking) to another undesired film due to the solventless adhesive passing through pinholes does not occur, and eventually, a multilayer film of three or more layers including the aluminum foil can be produced by lamination using a solventless adhesive.

### Brief Description of Drawings

FIG. 1 is an explanatory cross-sectional view illustrating a structure of an example of a multilayer film of the present invention.
FIG. 2 is an explanatory view illustrating a structure of an example of a laminator for producing the multilayer film of the present invention.

### Description of Embodiments

Embodiments of the present invention will be described in detail below.

### [Multilayer film]

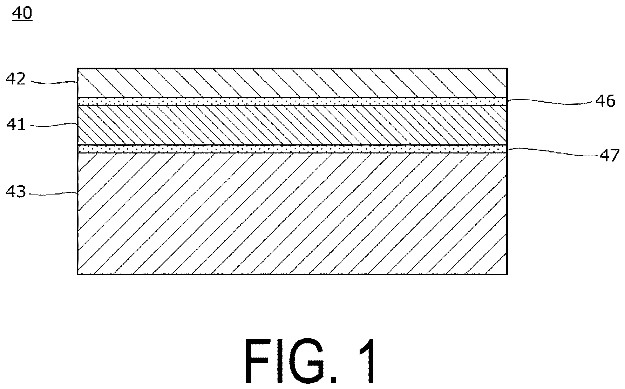

A method for producing a multilayer film of the present invention is a method for producing a multilayer film of three or more layers by bonding three or more raw material films. For example, as illustrated in FIG. 1, a multilayer film 40 includes three films including an outer layer film 42 made of a resin, an inner layer film 43 made of a resin, and an intermediate layer film 41 including aluminum foil provided between the inner layer film 43 and the outer layer film 42. The outer layer film 42 and the intermediate layer film 41 are bonded to each other by a first adhesive layer 46 formed of a solventless adhesive applied by a first coating device 10 of a laminator 1 described later in detail, and the inner layer film 43 and the intermediate layer film 41 are bonded to each other by a second adhesive layer 47 formed of a solventless adhesive applied by a second coating device 20 of the laminator 1. The multilayer film 40 has no mark (pinhole mark) of the solventless adhesive on the outer surface of the outer layer film 42 and the inner layer film 43.

As a material contained in the outer layer film 42, a polyamide-based resin or a polyester-based resin is preferably used.

Furthermore, examples of usable polyamide-based resins include nylon 6, nylon 8, nylon 6,6, a nylon 6/6,6 copolymer, nylon 6,10, meta-xylylene adipamide (MXD6), nylon 11, and nylon 12.

Examples of usable polyester-based resins include polyethylene terephthalate (PET) and polybutylene terephthalate (PBT). Copolyesters containing other polyester units may also be used as long as the properties of these resins are not impaired. Among copolymerization components for forming such a copolyester, isophthalic acid, p-β-oxyethoxybenzoic acid, naphthalene 2,6-dicarboxylic acid, diphenoxyethane-4,4'-dicarboxylic acid, 5-sodium sulfoisophthalic acid, adipic acid, sebacic acid or an alkyl ester derivative thereof, or the like can be used as a dicarboxylic acid component. As a glycol component, propylene glycol, 1,4-butanediol, neopentyl glycol, 1,6-hexylene glycol, cyclohexanedimethanol, an ethylene oxide adduct of bisphenol A, diethylene glycol, triethylene glycol, or the like can be used. These compounds can be used alone, or two or more thereof can be used in combination.

A thickness of the outer layer film 42 is appropriately selected depending on the type of the resin included in the outer layer film 42, the application of the multilayer film, and the like. For example, when the outer layer film 42 includes nylon, the thickness is preferably from 10 to 30 µm, and, when the outer layer film 42 includes polyethylene terephthalate (PET), the thickness is preferably from 6 to 28 µm.

A surface of the outer layer film 42 in contact with the adjacent layer is preferably subjected to a surface modification treatment such as a corona treatment in order to improve adhesion to the adjacent layer.

As a material contained in the inner layer film 43, a resin excellent in heat sealability is preferably used in order to form a pouch packaging bag or a heat seal lid. Examples of such a resin include polyolefin-based resins such as polyethylene (PE) and polypropylene (PP).

A thickness of the inner layer film 43 is not particularly limited, and, for example, when the inner layer film 43 includes polyethylene, the thickness is preferably from 50 to 200 µm, and, when the inner layer film 43 includes polypropylene, the thickness is preferably from 30 to 150 µm.

As the inner layer film 43, a non-stretched film such as CPP is preferably used.

The intermediate layer film 41 includes an aluminum foil, and the thickness thereof is not particularly limited, but is preferably in a range of from 5 to 100 µm.

The intermediate layer film 41 may have microholes (pinholes). The pinhole preferably has a diameter of 0.5 mm or less, for example.

The adhesive layers 46 and 47 are formed of a specific solventless adhesive which will be described in detail below. First, the solventless adhesive is a two-part reaction curable adhesive composed of a main agent and a curing agent.

Thicknesses of the adhesive layers 46 and 47 are preferably from 0.5 to 3 µm.

### [Method for producing multilayer film]

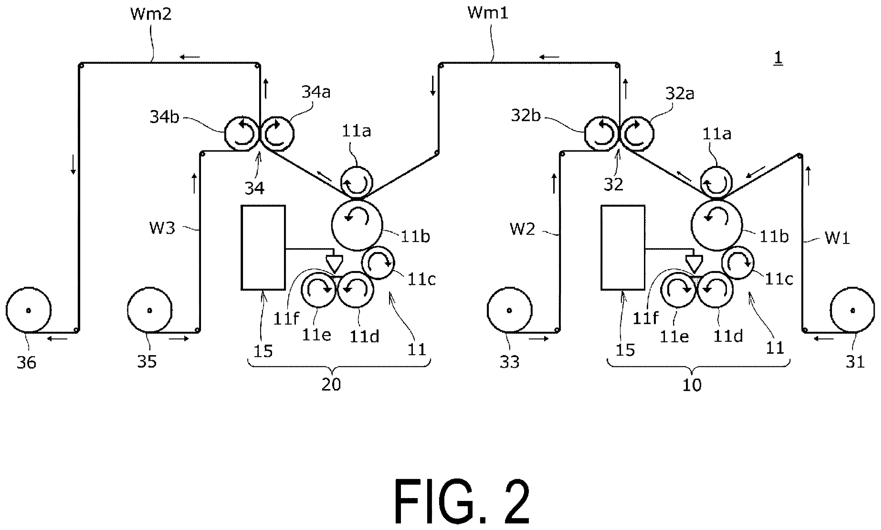

As illustrated in FIG. 2, the method for producing a multilayer film according to an embodiment of the present invention is a method for producing a multilayer film by bonding three long films W1, W2, and W3 with a solventless adhesive while conveying the films at a high speed using a laminator 1, a first lamination step of applying a solventless adhesive, obtained by mixing two liquid components (a main agent and a curing agent) in advance, to a first film W1 by a first coating device 10, and then laminating the second film W2 while superimposing the second film W2 with a first adhesive-applied layer including the solventless adhesive interposed therebetween to obtain a first intermediate body Wm1, and a second lamination step of conveying the first intermediate body Wm1 obtained in the first lamination step to the second coating device 20 without winding the first intermediate body Wm1 by a winding roll, applying a solventless adhesive in which two liquid components (a main agent and a curing agent) are mixed in advance by the second coating device 20, and laminating the third film W3 while superimposing the third film W3 with a second adhesive-applied layer including the solventless adhesive interposed therebetween are performed in this order, and then an aging step of curing the first adhesive-applied layer and the second adhesive-applied layer to obtain an adhesive layer respectively is performed.

When the multilayer film 40 illustrated in FIG. 1 is formed, a resin film such as PET serving as the outer layer film 42 is used as the first film W1, an aluminum foil serving as the intermediate layer film 41 is used as the second film W2, and a resin film such as CPP serving as the inner layer film 43 is used as the third film W3.

The laminator 1 is a so-called tandem laminator, and includes the first coating device 10 that applies the solventless adhesive to the first film W1, an unwinding roll 31 that supplies the first film W1 to which the solventless adhesive is to be applied to the first coating device 10, a laminating unit 32 that includes a pair of pressure rolls 32a and 32b and laminates the second film W2 on the first film W1 on which an adhesive-applied layer fed from the first coating device 10 is formed, an unwinding roll 33 that supplies the second film W2, the second coating device 20 that applies the solventless adhesive to the first intermediate body Wm1 that is a joined body of the first film W1 and the second film W2, a laminating unit 34 that includes a pair of pressure rolls 34a and 34b and laminates the third film W3 on the first intermediate body Wm1 on which the second adhesive-applied layer fed from the second coating device 20 is formed, an unwinding roll 35 that supplies the third film W3, and a winding roll 36 that winds a second intermediate body Wm2 that is a joined body of the first film W1, the second film W2, and the third film W3.

The first coating device 10 includes a coating unit 11 that sequentially transfers the mixed solventless adhesive onto one surface of the first film W1 being conveyed by a plurality of rolls, and applies the solventless adhesive while thinning the adhesive, and a supply unit 15 that supplies the solventless adhesive to the coating unit 11. The second coating device 20 includes the coating unit 11 that sequentially transfers the mixed solventless adhesive onto the other surface (the surface opposite to the first film W1) of the second film W2 included in the first intermediate body Wm1 by a plurality of rolls, and applies the solventless adhesive while thinning the adhesive, and the supply unit 15 that supplies the solventless adhesive to the coating unit 11. Since the first coating device 10 and the second coating device 20 have basically the same configuration, only the first coating device 10 will be described below. In FIG. 2, in the second coating device 20, those having the same configuration as that of the first coating device 10 are denoted by the same reference numerals.

The coating unit 11 includes a plurality of (five in the illustrated example) rolls 11a to 11e which are rotatably supported and provided in series in axial parallel to each other. Specifically, the coating unit 11 includes a pair of coating rolls 11a and 11b facing each other, and transfer rolls 11c, 11d, and 11e that supply a solventless adhesive while sequentially transferring the solventless adhesive to one (coating roll 11b) of the pair of coating rolls 11a and 11b. Among the transfer rolls, the two transfer rolls 11d and 11e located at an end on a supply start side of the solventless adhesive are arranged adjacent to each other and facing each other along a horizontal direction, and a reservoir 11f that mixes a main agent and a curing agent to prepare a solventless adhesive and temporarily stores the solventless adhesive is formed in an upper portion between the transfer rolls 11d and 11e. The reservoir 11f is formed by partitioning a space with a substantially V-shaped cross section between the transfer rolls 11d and 11e with a pair of weir plates (not illustrated) provided to be spaced apart from each other in the longitudinal direction of the transfer rolls 11d and 11e.

The supply unit 15 includes a main agent tank in which the main agent is accommodated, a curing agent tank in which the curing agent is accommodated, and an adhesive supply part that supplies the main agent and the curing agent, and may further include a mixer that stirs the solventless adhesive stored in the reservoir 11f.

In the laminator 1, the first film W1 is conveyed from the unwinding roll 31 to between the pair of coating rolls 11a and 11b of the first coating device 10 at a predetermined speed. On the other hand, in the supply unit 15, the main agent and the curing agent are heated to a predetermined temperature in the main agent tank and the curing agent tank and melted. The heated and melted main agent and curing agent are supplied in a predetermined amount from the adhesive supply part to the reservoir 11f. The solventless adhesive is continuously supplied from the supply unit 15 to the reservoir 11f so that a liquid level in the reservoir 11f is kept constant. Then, in the coating unit 11, the solventless adhesive is sequentially transferred to the coating roll 11b via the transfer rolls 11d and 11c, and applied to the surface of the first film W1 passing between the pair of coating rolls 11a and 11b from the coating roll 11b, thereby forming a first adhesive-applied layer.

Next, the first film W1 on which the first adhesive-applied layer is formed is sent to the laminating unit 32. On the other hand, the second film W2 is supplied from the unwinding roll 33 to the laminating unit 32, and in the laminating unit 32, while the first film W1 and the second film W2 are superimposed on each other in such a manner that the second film W2 is in contact with the first adhesive-applied layer on the surface of the first film W1, the first film W1 and the second film W2 are pressure-bonded by the pair of pressure rolls 32a and 32b to be bonded to each other, thereby obtaining the first intermediate body Wm1 in which the pair of films W1 and W2 is bonded (first lamination step).

The first intermediate body Wm1 is not wound, and is subjected to the second lamination step while the solventless adhesive included in the first adhesive-applied layer of the first intermediate body Wm1 is flowable.

In the second lamination step, the first intermediate body Wm1 is conveyed between the pair of coating rolls 11a and 11b of the second coating device 20 at a predetermined speed. On the other hand, in the second coating device 20, similarly to the first coating device 10 according to the first lamination step, the second adhesive-applied layer is formed by applying the adhesive to the surface of the second film W2 in the first intermediate body Wm1 passing between the pair of coating rolls 11a and 11b of the second coating device 20. Next, the first intermediate body Wm1 on which the second adhesive-applied layer is formed is sent to the laminating unit 34. On the other hand, the third film W3 is supplied from the unwinding roll 35 to the laminating unit 34, and in the laminating unit 34, while the first intermediate body Wm1 and the third film W3 are superimposed on each other in such a manner that the third film W3 is in contact with the second adhesive-applied layer on the surface of the second film W2 of the first intermediate body Wm1, the first intermediate body Wm1 and the third film W3 are pressure-bonded by the pair of pressure rolls 34a and 34b to be bonded to each other, thereby obtaining the second intermediate body Wm2 in which the first film W1, the second film W2, and the third film W3 are stacked and bonded in this order (second lamination step). The second intermediate body Wm2 is wound around the winding roll 36, and the first adhesive-applied layer and the second adhesive-applied layer are cured by performing aging treatment in which the second intermediate body Wm2 is left standing at normal temperature or under heating as it is to form an adhesive layer. As a result, the multilayer film 40 is obtained in which the intermediate layer film 41 (second film W2) including an aluminum foil is bonded between the outer layer film 42 (first film W1) made of a resin and the inner layer film 43 (third film W3) made of a resin with the first adhesive layer 46 and the second adhesive layer 47, each including a solventless adhesive, interposed therebetween. At the time of being wound around the winding roll 36, the solventless adhesive included in the first adhesive-applied layer and the second adhesive-applied layer of the second intermediate body Wm2 remains flowable; however, since the first film W1 (resin outer layer film 42) and the third film W3 (resin inner layer film 43) do not have microholes through which the solventless adhesive having flowability passes, blocking does not occur even if the aging treatment is performed in a state where the second intermediate body Wm2 is wound.

In the above, the heating temperature of the main agent and the curing agent, and the coating temperature of the solventless adhesive to the first film W1 and the first intermediate body Wm1 are all, for example, in a range of from 40°C to 80°C.

The temperature of the pressure rolls 32a and 32b in the laminating unit 32 and the temperature of the pressure rolls 34a and 34b in the laminating unit 34 are, for example, from 30°C to 80°C.

The supplying speed of each of the films W1, W2, and W3, that is, an application speed of the solventless adhesive is preferably from 100 to 200 m/min.

An amount of the solventless adhesive applied is preferably from 0.5 to 3.0 g/m², and more preferably from 1.2 to 2.1 g/m². If the amount of the solventless adhesive applied is too small, sufficient adhesiveness cannot be obtained, whereas if the amount of the solventless adhesive applied is too large, a telescope may occur at the time of winding the multilayer film, and a quality defect such as tunneling may occur.

A temperature of the aging treatment of the second intermediate body Wm2 wound by the winding roll 36 is, for example, from 30°C to 70°C, and a treatment time is, for example, from 48 to 96 hours.

In the laminator 1, a time from the start of mixing of the main agent and the curing agent in the first coating device 10 to the coating on the first film W1 is, for example, from 0.5 to 20 minutes.

In the laminator 1, other coating conditions can be appropriately set.

### [Solventless adhesive]

The solventless adhesive used in the method for producing a multilayer film of the present invention contains a main agent made of a polyester-based resin and a curing agent made of an aliphatic isocyanate. As the main agent included in the solventless adhesive, it is preferable to use a polyester-based resin having good adhesion to the outer layer film 42, the intermediate layer film 41, and the inner layer film 43 and excellent lamination strength and impact resistance, and a polyester polyol resin is particularly preferable.

The polyester polyol resin may be produced by an esterification reaction between a polybasic acid such as succinic acid, adipic acid, azelaic acid, sebacic acid, phthalic acid, isophthalic acid, or terephthalic acid and a polyhydric alcohol such as ethylene glycol, 1,2-propanediol, 1,3-butanediol, 1,4-butanediol, 3-methyl-1, 5-pentanediol, 1,6-hexanediol, 1,4-cyclohexanedimethanol, neopentyl glycol, 3,3-bis(hydroxymethyl)heptane, diethylene glycol, dipropylene glycol, glycerin, or trimethylolpropane.

Specific examples of the polyester polyol resin include (1) adipate-based polyester glycols such as poly(ethylene adipate), poly(diethylene adipate), poly(propylene adipate), poly(tetramethylene adipate), poly(hexamethylene adipate), and poly(neopentylene adipate), (2) polycaprolactone-based polyester glycols such as poly-ε-caprolactone, and (3) other polyester polyol resins such as poly(hexamethylene sebacate) and poly(hexamethylene carbonate).

Further, in addition to the polyester-based resin, for example, a polyurethane-based compound may be contained as the main agent. By using such a main agent, for example, when an ink layer containing ink is formed on an inner surface of the outer layer film 42 (surface on the intermediate layer film 41 side), the ink usually contains a urethane component, so that adhesion to the ink layer can be secured.

A number-average molecular weight of the resin constituting the main agent is preferably from 400 to 1500, and more preferably from 500 to 1000. When the number-average molecular weight of the resin included in the main agent is less than 400, the viscosity of the solventless adhesive decreases, and as a result, suitability for continuous lamination may deteriorate when producing the multilayer film. Since the number of terminal reactive groups increases, it is necessary to increase the amount of the curing agent, and as a result, there is a problem in that the hardness of the obtained adhesive layers 46 and 47 increases due to an increased amount of crosslinking and the impact resistance of the adhesive layers 46 and 47 may deteriorate. On the other hand, when the number-average molecular weight of the resin included in the main agent is more than 1500, the impact resistance of the obtained adhesive layers 46 and 47 is improved; however, since the viscosity of the solventless adhesive increases, a wetting failure may occur during coating the solventless adhesive, thereby causing an appearance defect or reduction in the lamination strength of the obtained multilayer film 40.

The viscosity of the main agent at 50°C is preferably from 600 to 1800 mPa·s, and more preferably from 1000 to 1400 mPa·s. When the viscosity of the main agent is less than 600 mPa·s, transfer unevenness of the roll occurs, the film formation of the adhesive layers 46 and 47 becomes unstable, and an appearance defect or extreme reduction in lamination strength of the obtained multilayer film 40 may occur. On the other hand, when the viscosity of the main agent is more than 1800 mPa·s, a wetting failure is likely to occur during coating the solventless adhesive, and an appearance defect or reduction in lamination strength of the obtained multilayer film 40 may occur.

As the curing agent constituting the solventless adhesive, it is preferable to use an isocyanate compound, particularly a mixture of an aliphatic isocyanate and an araliphatic diisocyanate.

As the aliphatic isocyanate constituting the curing agent, butane-1,4-diisocyanate, 1,6-hexamethylene diisocyanate (HDI), isopropylene diisocyanate, methylene diisocyanate, 2,2,4-trimethylhexamethylene diisocyanate, m-tetramethylxylylene diisocyanate, lysine diisocyanate, dimer diisocyanate obtained by converting a carboxyl group of dimer acid into an isocyanate group, and the like can be used alone or in combination of two or more thereof. Among them, 1,6-hexamethylene diisocyanate (HDI) is preferable.

Examples of the aromatic aliphatic diisocyanate constituting the curing agent include 1,3-xylene diisocyanate, 1,4-xylene diisocyanate, or their mixtures (XDI), 1,3-tetramethylxylene diisocyanate, 1,4-tetramethylxylene diisocyanate, or their mixtures (TMXDI), and ω,ω'-diisocyanate-1,4-diethylbenzene.

A number-average molecular weight of the resin constituting the curing agent is preferably from 400 to 1500, and more preferably from 500 to 1000. When the number-average molecular weight of the resin constituting the curing agent is less than 400, the viscosity of the solventless adhesive decreases, and as a result, suitability for continuous lamination may deteriorate when producing the multilayer film. Since the number of terminal reactive groups increases, it is necessary to increase the amount of the main agent, and, as a result, there is a problem in that the hardness of the obtained adhesive layers 46 and 47 increases due to an increased amount of crosslinking and the impact resistance of the adhesive layers 46 and 47 deteriorates. On the other hand, when the number-average molecular weight of the resin included in the curing agent is more than 1500, the impact resistance of the obtained adhesive layers 46 and 47 is improved; however, the viscosity of the solventless adhesive increases, and therefore, a wetting failure may occur during coating the solventless adhesive, thereby causing an appearance defect or reduction in the lamination strength of the obtained multilayer film 40.

The viscosity of the curing agent constituting the solventless adhesive is preferably from 150 to 1300 mPa·s, and more preferably from 450 to 850 mPa·s at 50°C. When the viscosity of the curing agent is less than 150 mPa·s, since the viscosity of the curing agent is low, the obtained adhesive layers 46 and 47 becomes soft, and as a result, the lamination strength may become low. On the other hand, when the viscosity of the curing agent is more than 1300 mPa·s, since the viscosity of the curing agent is high, the obtained adhesive layers 46 and 47 become hard, and as a result, the impact resistance may become low.

In the solventless adhesive, with respect to 100 parts by mass of the main agent, the curing agent is preferably contained in a range of from 30 to 200 parts by mass, and is particularly preferably in a range of from 30 to 70 parts by mass. When the ratio of the curing agent is too small, since the obtained adhesive layers 46 and 47 are insufficiently crosslinked, the lamination strength of the obtained multilayer film 40 may deteriorate. On the other hand, when the ratio of the curing agent is too large, the main agent and the curing agent are not sufficiently mixed, and thus the obtained adhesive layers 46 and 47 include a mixture of an insufficiently crosslinked portion and an excessively crosslinked portion. As a result, the lamination strength, and the impact resistance of the obtained multilayer film 40 may deteriorate.

In the present invention, the viscosity of the solventless adhesive is from 700 to 2000 mPa·s, and more preferably from 1000 to 1600 mPa·s at 50°C. When the viscosity of the solventless adhesive is less than 700 mPa·s, transfer between rolls may become poor during coating of the solventless adhesive, which results in "transfer unevenness". In addition, since the solventless adhesive is not uniformly coated and is partially reduced, the lamination strength and impact resistance may be reduced. On the other hand, when the viscosity of the solventless adhesive is more than 2000 mPa·s, a "wetting failure" may occur during coating the solventless adhesive, and the resulting adhesive layers 46 and 47 may become partially thin. The presence of thin portions in the adhesive layers 46 and 47 may cause reductions in lamination strength and impact resistance.

The solventless adhesive may contain a polyurethane-based compound in addition to the main agent and the curing agent. When the polyurethane-based compound is contained, the adhesion to the ink layer can be secured when the ink layer containing the ink is formed on the inner surface of the outer layer film 42.

The solventless adhesive may further contain various additive agents such as a filler, a softener, an antioxidant, a stabilizer, an adhesion promoter, a leveling agent, an anti-foaming agent, a plasticizer, an inorganic filler, a tackifying resin, a fiber, a colorant such as a pigment, or a lifetime extender.

Furthermore, the solventless adhesive may contain an adhesion promoter. As the adhesion promoter, a coupling agent such as a silane coupling agent, a titanate-based coupling agent, or an aluminum-based coupling agent, an epoxy resin, or the like can be used.

Specific examples of the silane coupling agent include aminosilanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, and N-phenyl-γ-aminopropyltrimethoxysilane, epoxysilanes such as β-(3,4-epoxycyclohexyl)ethyltrimethoxysilane, γ-glycidoxypropyltrimethoxysilane, and γ-glycidoxypropyltriethoxysilane, vinylsilanes such as vinyltris(β-methoxyethoxy)silane, vinyltriethoxysilane, vinyltrimethoxysilane, and γ-methacryloxypropyltrimethoxysilane, hexamethyldisilazane, and γ-mercaptopropyltrimethoxysilane.

Specific examples of the titanate-based coupling agent include tetraisopropoxytitanium, tetra-n-butoxytitanium, butyl titanate dimer, tetrastearyltitanate, titanium acetylacetonate, titanium lactate, tetraoctylene glycol titanate, titanium lactate, and tetrastearoxytitanium.

Specific examples of the aluminum-based coupling agent include acetoalkoxyaluminum diisopropylate.

Specific examples of the epoxy resin include various commercially available epoxy resins such as epibis-type, novolac-type, β-methyl epichlorohydrin-type, cyclic oxirane-type, glycidyl ether-type, glycidyl ester-type, polyglycol ether-type, glycol ether-type, epoxidized fatty ester-type, polyvalent carboxylic ester-type, aminoglycidyl-type, and resorcinol-type epoxy resins.

A packaging container including the multilayer film 40 is suitable as a packaging container of a retort pouch, a refill pouch, or the like containing a food (curry, seasoning sauce, etc.), a liquid such as a beverage, a detergent, a softener, a bleaching agent, a shampoo, a conditioner, or the like.

The embodiment in the present invention has been described above. However, the present invention is not limited to the above embodiment, and various modifications are possible.

For example, a layer configuration of the multilayer film is not limited to the configuration illustrated in FIG. 1, may be a configuration obtained by laminating four or more films, and, for example, may be a configuration including a plurality of intermediate layer films. In this case, at least one of the intermediate layer films is an aluminum foil. In the multilayer film, an ink layer, a vapor deposition layer, and the like may be formed on the inner surface of the outer layer film (surface on the intermediate layer film side), the inner surface of the inner layer film (surface on the intermediate layer film side), and the like.

For example, the method for producing a multilayer film of the present invention is not limited to the case where the intermediate layer film includes an aluminum foil, and is also useful when a raw material film having a through hole having a size that allows the solventless adhesive to pass therethrough in the viscosity during applying the solventless adhesive in the first lamination step is used as the intermediate layer film.

In addition, for example, the method for producing a multilayer film of the present invention is not limited to the case where the resin film is the first film to which the solventless adhesive is applied by the first coating device, while the first film may be an aluminum foil, the second film may be a resin film, in the first intermediate body, the second adhesive-applied layer may be formed on the first film (aluminum foil) by the second coating device, and the resin film which is the third film may be superimposed with the second adhesive-applied layer interposed therebetween.

### Reference Signs List

1 Laminator
10 First coating device
11 Coating unit
11a, 11b Coating roll
11c, 11d, 11e Transfer roll
11f Reservoir
15 Supply unit
20 Second coating device
31 Unwinding roll
32 Laminating unit
32a, 32b Pressure roll
33 Unwinding roll
34 Laminating unit
34a, 34b Pressure roll
35 Unwinding roll
36 Winding roll
40 Multilayer film
41 Intermediate layer film
42 Outer layer film
43 Inner layer film
46 First adhesive layer
47 Second adhesive layer
W1 First film
W2 Second film
W3 Third film
Wm1 First intermediate body
Wm2 Second intermediate body

## Claims

1. A method for producing a multilayer film, the multilayer film comprising three or more films bonded to each other with an adhesive layer interposed therebetween, the method comprising:
in a first coating device provided with a pair of coating rolls facing each other, performing a first lamination step of applying an adhesive to a first film passing between the coating rolls and laminating a second film while superimposing the second film with a first adhesive-applied layer including the adhesive interposed therebetween to obtain a first intermediate body; in a second coating device provided with a pair of coating rolls facing each other, performing a second lamination step of applying an adhesive to the first intermediate body and laminating a third film while superimposing the third film with a second adhesive-applied layer including the adhesive interposed therebetween; and
after the first and second lamination steps, performing an aging step of solidifying the first adhesive-applied layer and the second adhesive-applied layer to obtain an adhesive layer respectively,
wherein the first adhesive-applied layer includes a solventless adhesive, and when the first adhesive-applied layer is subjected to the second lamination step, the solventless adhesive included in the first adhesive-applied layer of the first intermediate body is flowable, and
of the first and second films, a film to be superimposed on the third film with the second adhesive-applied layer interposed therebetween is an aluminum foil.

2. The method for producing a multilayer film according to claim 1, wherein the first film is an outer layer film comprising a resin, the second film is an aluminum foil, and the third film is an inner layer film comprising a resin.

3. The method for producing a multilayer film according to claim 2, wherein the outer layer film comprises a polyamide-based resin or a polyester-based resin.

4. The method for producing a multilayer film according to claim 2, wherein the inner layer film comprises a polyolefin-based resin.

5. The method for producing a multilayer film according to claim 1, wherein the second adhesive-applied layer comprises a solventless adhesive.

6. The method for producing a multilayer film according to claim 1, wherein the solventless adhesive comprises a main agent and a curing agent, the main agent comprising a polyester-based resin, and the curing agent comprising an aliphatic isocyanate, and a viscosity of the solventless adhesive is from 700 to 2000 mPa·s at 50°C.

7. The method for producing a multilayer film according to claim 1, wherein an amount of the adhesive applied to the first adhesive-applied layer is from 0.5 to 3.0 g/m².

8. A multilayer film produced by the production method according to claim 1.
